Europäisches Patentamt

European Patent Office

Office européen des brevets

(11) Publication number: **0 363 629**

**A2**

## (12) EUROPEAN PATENT APPLICATION

(21) Application number: **89116297.6**

(22) Date of filing: **04.09.89**

(51) Int. Cl.5: **A43B 23/02**

(30) Priority: **14.10.88 IT 2233088**

(43) Date of publication of application:
**18.04.90 Bulletin 90/16**

(84) Designated Contracting States:
**DE FR GB IT**

(71) Applicant: **NUOVA ZARINE S.p.A.**
**COSTRUZIONE MACCHINE E STAMPI PER**
**CALZATURE**
**Strada Pavese, 33**
**I-27036 Mortara Pavia(IT)**

(72) Inventor: **Zaino, Luigi**
**Via De Amicis, 27**
**I-27036 Mortara Pavia(IT)**

(74) Representative: **Luksch, Giorgio, Dr.-Ing. et al**
**Ing. A. Giambrocono & C. S.r.l. Via Rosolino**
**Pilo, 19/b**
**I-20129 Milano(IT)**

(54) **Method for producing vamps and a vamp obtained thereby.**

(57) A vamp production method characterised by comprising a succession of stages in which:

a) a pattern vamp is formed from leather or other suitable material;

b) starting with said pattern vamp, a mould is constructed in known manner carrying in one (4) of its parts the impression (3) of said pattern vamp in negative form;

c) a support element (18) preferably of leather or fabric is superposed on said impression (3);

d) the mould is closed and into it there is injected a component chosen from polyvinylchloride plastisol and polyurethane resin, said injection being done while keeping the mould substantially at the gelling temperature of said component;

e) the resin is allowed to set so that it becomes secured to the support element (18), with resultant bonding between said support element and a layer of said component.

A vamp obtained by the aforesaid method, comprising a layer (100) of a component chosen from polyvinylchloride and polyurethane resin, bonded to a support layer (18) advantageously of leather or fabric.

Footwear with its vamp formed by the method.

Leather articles such as bags, suitcases, purses and the like, formed by the method.

Fig. 1

## METHOD FOR PRODUCING VAMPS AND A VAMP OBTAINED THEREBY

This invention relates to a method for producing vamps and a vamp obtained thereby.

Various vamp production methods are already known, but these are of high implementation cost and sometimes of lengthy execution time.

An object of the present invention is to provide a vamp production method which is economical, substantially simple to implement and of short execution time.

A further object is to provide a vamp produced in accordance with the aforesaid method which has all the qualities and merits of vamps produced by the methods of the known art.

These and further objects are attained by a vamp production method characterised by comprising a succession of stages in which:

a) a pattern vamp is formed from leather or other suitable material;

b) starting with said pattern vamp, a mould is constructed in known manner carrying in one of its parts the impression of said pattern vamp in negative form;

c) a support element preferably of leather or fabric is superposed on said impression;

d) the mould is closed and into it there is injected a component chosen from polyvinylchloride plastisol and polyurethane resin, said injection being done while keeping the mould substantially at the gelling temperature of said component;

e) the resin is allowed to set so that it becomes secured to the support element, with resultant bonding between said support element and a layer of said component.

The vamp obtained by the aforesaid method is characterised by comprising a layer of a component chosen from polyvinylchloride and polyurethane resin bonded to a support layer advantageously of leather or fabric.

The present invention will be more apparent from the accompanying drawing which is provided by way of non-limiting example and in which:

Figure 1 is an exploded perspective diagrammatic view of a device for implementing the method according to the invention;

Figure 2 is a partly sectional perspective view of a vamp obtained in accordance with the present invention.

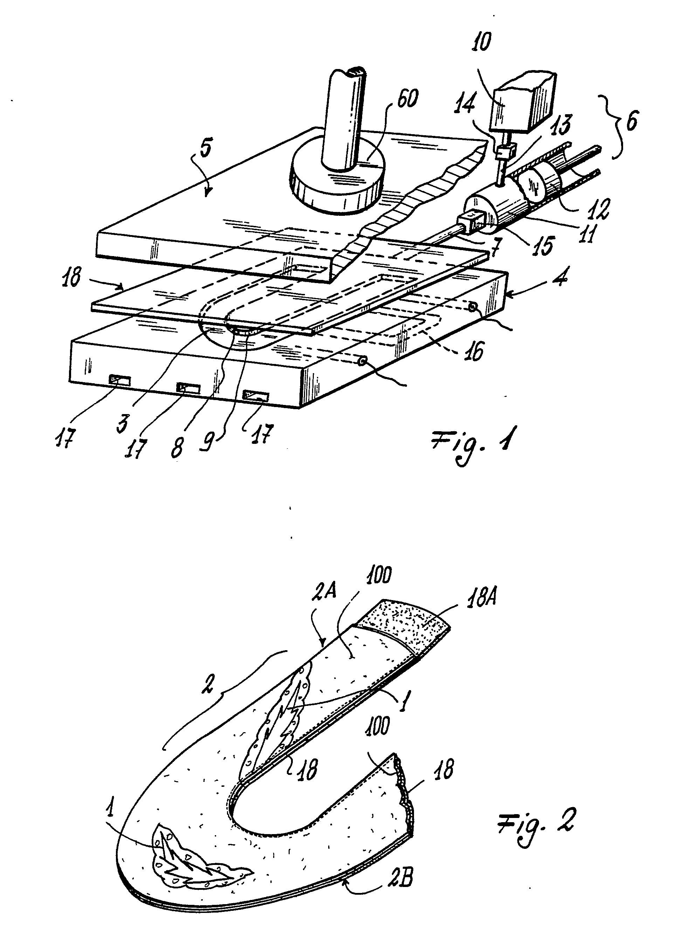

With reference to said figures, the method according to the present invention comprises a first stage in which the required pattern vamp is constructed by conventional methods in leather or other suitable material. The pattern vamp can carry a particular design obtained by stitching, material addition or other expedients well known in the field of conventional footwear, or a simple design such as that on smooth footwear, ie a design deriving from the inherent nature of the material, ie leather or fabric. This design (indicated by 1 in Figure 2) is then reproduced on a component chosen from polyvinylchloride plastisol and polyurethane resin laid on a flat support element, advantageously of second-choice leather such as crust leather, or fabric or synthetic material.

The pattern vamp (not shown) comprising said "design" is used as the "positive" for forming an impression 3 in a plate 4 advantageously of aluminium, which with a second cover plate 5 also of aluminium defines a usual mould. During injection of the plastisol there acts on the latter plate 5 a piston 60 operated in known manner to exert the necessary closure pressure, the other plate 4 being supported by any suitable support.

The impression 3 is formed in the plate 4 for example by covering the pattern vamp with silicone, allowing this silicone to set so that it carries the design of the pattern vamp and, using known methods and processes, transferring said impression from the silicone to said mould plate 4.

Said mould is associated with a device 6 for injecting a component, such as a vinyl resin or polyvinylchloride plastisol (or more simply PVC) into the impression 3. The injection device 6 is connected to said impression by at least one tube 7 which opens at 8 in a wall 9 of said impression. Specifically, said device 6 comprises a reservoir 10 for the PVC plastisol connected to a cylinder 11 in which a piston 12 moves by known means. This connection is made via a tube 13 comprising a suction valve 14, for example a unidirectional valve.

Finally, said tube 7 extends from the cylinder 11 and comprises a feed valve 15, for example a unidirectional valve.

The plate 4 also comprises heater or resistance elements 16 and ducts 17 for cooling said plate.

For implementing the method of the invention, a flat support element 18 advantageously of second grade leather such as crust leather, fabric or other material, which can be synthetic, is interposed between the two plates 4 and 5.

When the flat support element 18 has been superposed on the plate 4, the mould is kept closed by thrust action exerted in any known manner, for example by a cylinder-piston unit operated by fluid under pressure.

Having done this the plate 4 is heated by electrical resistance elements 16 or by hot fluid traversing ducts 17 to heat the plate to a temperature substantially equal to the plastisol gelling temperature. Simultaneously the PVC plastisol is injected into the impression 3 through the tube 7.

When the PVC plastisol has filled the entire said impression 3 and after waiting a certain time to allow gelling of the resin, the mould is cooled to at least 100° C by circulating cooling liquid through the plate 4 via the ducts 17, to solidify said resin.

At this point the mould is opened and the assembly formed by a PVC plastisol layer 100 and the support element 18 securely bonded together is extracted. This latter assembly is then trimmed by removing those parts of the support element 18 which are not to be used in the subsequent footwear production, so obtaining the required vamp 2.

To eliminate one stage of the method, ie that involving trimming the support element 18 to the dimensions of the PVC plastisol layer 100, said element 18 can already be given the required dimensions before molding the PVC plastisol.

Finally, the vamp 2 constructed in accordance with the present method and substantially of horse-shoe shape, is worked in the manner of a conventional vamp to form the footwear. Specifically, the shaping operating consists of joining together the two sides 2A and 2B of the vamp 2 by gluing or sewing. For this purpose, advantageously one (2A) of the two sides has a part 18A of the sheet element (of second grade leather or fabric) not covered with the PVC plastisol layer 100, the part 18A then being partially superimposed on the vamp side 2B to facilitate the gluing and/or sewing operation.

The method for producing a vamp according to the invention is economical and involves short implementation time.

The vamp obtained by said method is totally similar to traditional vamps in shape and quality.

## Claims

1. A vamp production method characterised by comprising a succession of stages in which:

a) a pattern vamp is formed from leather or other suitable material;

b) starting with said pattern vamp, a mould is constructed in known manner carrying in one (4) of its parts the impression (3) of said pattern vamp in negative form;

c) a support element (18) preferably of leather or fabric is superposed on said impression (3);

d) the mould is closed and into it there is injected a component chosen from polyvinylchloride plastisol and polyurethane resin, said injection being done while keeping the mould substantially at the gelling temperature of said component;

e) the resin is allowed to set so that it becomes secured to the support element (18), with resultant bonding between said support element and a layer of said component.

2. A method as claimed in claim 1, characterised in that the mould comprises two superposed plates (4, 5), of which one (4) carries the impression (3) of the desired design (1) for the vamp, said one plate (4) comprising heating and cooling means (16, 17).

3. A method as claimed in claim 1, characterised in that the component is injected while keeping the moulding at a temperature advantageously between 150 and 200° C.

4. A method as claimed in claims 1 and 2, characterised in that the dimensions of the layer-forming support element (18) are substantially equal to those of the plate (4) carrying the impression (3).

5. A method as claimed in claim 4, characterised in that the support element (18) is trimmed after lamination.

6. A method as claimed in claim 1, characterised in that before lamination, the support element (18) is shaped substantially as the vamp to be obtained.

7. A vamp obtained by the method of claim 1, characterised by comprising a layer (100) of a component chosen from polyvinylchloride and polyurethane resin, bonded to a support layer (18) advantageously of leather or fabric.

8. A vamp as claimed in claim 7, characterised by being substantially of horse-shoe shape, defining two sides (2A, 2B) to be joined together.

9. A vamp as claimed in claim 8, characterised in that on one (2A) of the two sides, a part (18A) of the layer (18) which supports the component layer (100) in not covered by said component layer (100), said part (18A) being able to partially cover the other side (2B) of the vamp (2) for the purpose of joining together said sides, said joint being obtained by gluing and/or sewing.

10. Footwear with its vamp formed by the method claimed in claim 1.

11. A leather article such as a bag, suitcase, purse and the like, formed by the method claimed in claim 1.

Fig. 1

Fig. 2